**Europäisches Patentamt**

(19) **European Patent Office**

**Office européen des brevets**

(11) Publication number : **0 604 522 B1**

# (12) EUROPEAN PATENT SPECIFICATION

(45) Date of publication of patent specification :
23.08.95 Bulletin 95/34

(51) Int. Cl.⁶ : **G03G 15/20**

(21) Application number : **92919905.7**

(22) Date of filing : **18.09.92**

(86) International application number :
**PCT/US92/07715**

(87) International publication number :
**WO 93/06534 01.04.93 Gazette 93/09**

(54) COATING SYSTEM FOR HEATED FIXING SURFACE.

(30) Priority : **18.09.91 US 762093**

(43) Date of publication of application :
**06.07.94 Bulletin 94/27**

(45) Publication of the grant of the patent :
**23.08.95 Bulletin 95/34**

(84) Designated Contracting States :
**DE FR GB IT**

(56) References cited :
EP-A- 0 254 269
US-A- 4 049 863
PATENT ABSTRACTS OF JAPAN vol. 9, no. 30
(P-333)8 February 1985 & JP,A, 59 172 669
DATABASE WPIL Week 8640, Derwent Publications Ltd., London, GB; AN 86-260436 (40) &
JP,A, 61 186 975
DATABASE WPI Week 7940, Derwent Publications Ltd., London, GB; AN 79-72859B (40) &
JP, A, 54 109 845

(73) Proprietor : **E.I. DU PONT DE NEMOURS AND COMPANY**
**1007 Market Street**
**Wilmington Delaware 19898 (US)**

(72) Inventor : **BATZAR, Kenneth**
**1712 Lark Lane**
**Cherry Hill, NJ 08003 (US)**
Inventor : **DUZICK, Timothy**
**607 Lisbeth Road**
**Newark, DE 19713 (US)**
Inventor : **McKEEN, Laurence**
**7 Crater Court**
**Sewell, NJ 08080 (US)**

(74) Representative : **Abitz, Walter, Dr.-Ing. et al**
**Patentanwälte Abitz & Partner,**
**Poschingerstrasse 6**
**D-81679 München (DE)**

EP 0 604 522 B1

## Description

## BACKGROUND OF THE INVENTION

This invention relates to non-stick coating systems for a fixing surface such as a fuser roll in reprographic apparatus. More particularly, it relates to multi-layer systems for such applications having good durability and thermal conductivity.

Various types of reprographic equipment include heated surfaces such as rollers or belts to fuse or fix the images applied elsewhere in the equipment, whether by laser beam, magnetic or other means. To prevent static electricity buildup, some coatings are made electrically conductive. Durability is necessary for handling large numbers of sheets of paper. Thermal conductivity is also important to permit higher throughput of pages in a given time, improved print quality and lower power consumption caused by lower stand-by temperatures and shorter start-up time.

Existing coating systems do not provide the combination of advantages needed and available with the present invention.

Non-stick coatings of fluoropolymers, polysiloxane resins, expoxy resins and other materials have used calcined or reactive alumina or silicon carbide. See U.S. Patent 4, 121,000 Wald (1978), 4,324,715 Emerick (1982) and Japanese Kokai 60-80883 Yamada (1985).

U.S. Serial No. 07/626,491 filed December 12, 1990--Tannenbaum discloses a superior blend of polyletrafluoroethylene (PTFE) and hexafluropropylene or fluorinated ethylene - propylene (FEP), a copolymer of tetrafluoroethylene with 8 - 18%, preferable about 12%, hexafluoropropylene.

PCT 91/04750 filed July 9, 1991 discloses fuser roll non-stick coatings containing stainless steel or aluminum flake for electrical conductivity.

## SUMMARY OF THE INVENTION

The present invention provides a coated substrated adapted for use at elevated temperatures in a reprographic apparatus, in which the substrate as coated with at least two coats with different compositions, a first coat adhered to the substrate and a second coat adhered to the first, with the first polyamide imide, and particulate fillers including 10 to 50% five particle aluminum oxide and 10 to 25% stainless steel flake, and the second coat comprising, by weight, 50 to 90% fluoropolymer and particulate fillers including 5 to 40% aluminum oxide and 5 to 40% aluminum flake.

## DETAILED DESCRIPTION OF THE INVENTION

It has been found that a complex coating system with at least two layers provides superior results for the purposes of durability, non-stick and thermal conductivity.

Preferably the coating systems of the invention are applied to a grit-blasted substrate, with which they give up to twice as good thermal conductivity and improved abrasion resistance with no loss of other properties, compared to systems of the prior art without aluminum oxide.

Primer compositions, used for the first coat which adhere to the substrates can be too aggressive chemically for aluminum flake. Therefore, even though aluminum flake gives better thermal conductivity, than stainless steel flake, the latter is used in primer coats of the invention. A fluorosurfactant also helps in wetting a grit-blasted aluminum substrate. Other additives and adjuvants such as surfactant defoamers, thickeners, pigments, colorants, and coalescing aids can be used as known in the art. For the second coat, aluminum flake has been found to give not only better heat transfer but also less intercoat adhesions difficult, due to its lower density and greater tendency to stay suspended as the coating dries. The aluminum flake should be stabilized as known in the art to minimize gassing in an aqueous system.

A major key to success of the invention is the use of calcined aluminum particulate material in both the first and second coats. This aids adhesion, durability, and, due to higher thermal conductivity than the fluoropolymer, it also increases heat transfer.

However, it would not do to merely add alumina to a known coating. Instead to obtain the advantages of the invention, it has been found important to use each of the features of the invention.

The following examples provide the preferred ingredient of the first and second coats which were mixed and applied by spraying without drying between coats, then cured at 420° C for 10 min.

2

### Example 1

#### Primer

| | |
|---|---:|
| Aluminum Oxide -reactive calcined type A−155G US Seive Series 325 mesh from Silberline | 7.027 |
| Stainless Steel Flake US Bronze type 316L-X-35 $\mu$m average particular size | 4.868 |
| PTFE in "T30" from Du Pont | 6.837 |
| Colloidal Silica in "Ludox AM" from Du Pont | 0.983 |
| FEP in "TE9075" from Du Pont | 4.337 |
| Amide-imide Resin in A-10 from Amoco | 4.272 |
| "Zonyl F9100" perfluoroalkyl ethoxylate Fluorinated Surfactant Mixture from Du Pont | 0.464 |
| "NOP-NDW" Non-Ionic surfactant from Henkel | 0.002 |
| "Triton X-100" octyl phenol polyether alcohol non-ionic surfactant from Rohm and Haas | 0.975 |
| Water | 61.992 |
| N, N-Diethylethanolamine | 0.602 |
| Triethylamine | 1.205 |
| Furfuryl Alcohol | 3.357 |
| N-methyl Pyrolidone | 2.847 |
| Ethylene Glycol | 0.232 |

Example 2

Topcoat

| | |
|---|---|
| Aluminum Flake - 15 $\mu$m average particle size in Hydropaste 825 from Silberline | 3.146 |
| Aluminum Oxide | 3.159 |
| PTFE in "T30" | 30.281 |
| PFA "T335" | 5.467 |
| Colloidal Silica in "Ludox AM" | 0.244 |
| Acrylic of 39 parts by weight terpolymer of methyl methacyrlate/57 parts ethyl acrylate/4 parts methacrylic acid, dispersion as a 40% solids latex in water, 0.2$\mu$m average particle size | 4.429 |
| Cerium Octoate | 0.536 |
| Triethanolamine | 1.126 |
| "Triton X-100" | 2.710 |
| Butyl Carbitol | 2.226 |
| Water | 37.910 |
| Triethanolamine | 4.225 |
| Hydrocarbon Solvent | 3.452 |
| Ethylene Glycol | 0.122 |
| Nitropropane | 0.629 |
| Hydrocarbon Solvent | 0.338 |

## Claims

1. A coated substrate adapted for use at elevated temperatures in a reprographic apparatus, in which the substrate is coated with at least two coats with different compositions, a first coat adhered to the substrate and a second coat adhered to the first, wherein:
   the first coat comprises by weight, 20 to 70% fluoropolymer and 10 to 50% polyamide imide, and particulate fillers including, 10 to 50% aluminum oxide and 10 to 25% stainless steel flake and
   the second coat comprises, by weight, 50 to 100% fluoropolymer and particulate fillers including 5 to 40% aluminum oxide and 5 to 40% aluminum flake.

2. The coated substrate of claim 1 wherein in each coat the fluoropolymer is selected from polytetrafluoroethylene, fluorinated ethylenepropylene, copolymer of tetrafluoroethylene with perfluoroalkyl vinyl ether, and blends of polytetrafluoro ethylene with at least one of fluorinated ethylene-propylene and copolymer of tetrafluorethylene with perfluoro alkyl vinyl ether.

3. The coated substrate of claim 2 wherein, in the first coat, the fluoropolymer is a blend by weight of 40 to 90% polytetrafluoroethylene and 10 to 60% fluorinated ethylene-propylene.

4. The coated substrate of claim 2 wherein, in the second coat, the fluoropolymer is a blend by weight of 60 to 90% polytetrafluoroethylene, and 10 to 40% copolymer of tetrafluoroethylene with perfluoro alkyl vinyl ether.

5. The coated substrates of claim 1 wherein the first coat is a blend comprising by weight 25 to 60% fluoropolymers, 10 to 25% polyamide-imide, 15 to 40% aluminum oxide and 10 to 30% stainless steel flake.

6. The coated substrate of claim 5 wherein the second coat is a blend comprising by weight 65 to 95% fluoropolymer, 5 to 20% aluminum oxide and 5 to 20% aluminum flake.

7. The coated substrate of claim 3
    wherein the first coat is a blend comprising by weight, 35 to 45% fluoropolymer, 12 to 17% polyamide-imide, 20 to 30% aluminum oxide and 15 to 25% stainless steel flake, and
    the second coat is a blend comprising 80 to 95% fluoropolymer, 5 to 10% aluminum oxide and 5 to 10% aluminum flake.

8. The coated substrate of claim 2 which also contains an amount of fluorosurfactant effective to wet the substrate.

9. The coated substrate of claim 7 wherein
    the first coat, the fluoropolymer blend contains 50 to 70% polytetrafluoroethylene and 30 to 50% flourinated ethylene propylene, and
    in the second coat, the fluoropolymer blend contains 70 to 80% polytetrafluoroethylene and 20 to 30% perfluoro alkyl vinyl ether.

10. The coated substrated of claim 1 which also has at least one other coat containing fluoropolymer adhered to the outer surface of the second coat.

**Patentansprüche**

1. Überzogenes Substrat, geeignet zur Verwendung bei erhöhten Temperaturen in einem reprographischen Gerät, in dem das Substrat mit wenigstens zwei Schichten mit unterschiedlichen Zusammensetzungen überzogen ist, einer ersten Schicht, die an dem Substrat haftet, und einer zweiten Schicht, die an der ersten Schicht haftet, worin
die erste Schicht, bezogen auf das Gewicht, 20 bis 70 % Fluorpolymer und 10 bis 50 % Polyamidimid und teilchenförmige Füllstoffe einschließlich 10 bis 50 % Aluminiumoxid und 10 bis 25 % Edelstahlflocke umfaßt, und
die zweite Schicht, bezogen auf das Gewicht, 50 bis 100 % Fluorpolymer und teilchenförmige Füllstoffe einschließlich 5 bis 40 % Aluminiumoxid und 5 bis 40 % Aluminiumflocke umfaßt.

2. Überzogenes Substrat nach Anspruch 1, worin in jeder Schicht das Fluorpolymer ausgewählt ist aus Polytetrafluorethylen, fluoriertem Ethylen-Propylen, einem Copolymer von Tetrafluorethylen mit Perfluoralkylvinylether und aus Mischungen von Polytetrafluorethylen mit wenigstens einem von fluoriertem Ethylen-Propylen und einem Copolymer von Tetrafluorethylen mit Perfluoralkylvinylether.

3. Überzogenes Substrat nach Anspruch 2, worin in der ersten Schicht das Fluorpolymer, bezogen auf das Gewicht, eine Mischung von 40 bis 90 % Polytetrafluorethylen und 10 bis 60 % fluoriertem Ethylen-Propylen darstellt.

4. Überzogenes Substrat nach Anspruch 2, worin die zweite Schicht, das Fluorpolymer, bezogen auf das Gewicht, eine Mischung von von 60 bis 90 % Polytetrafluorethylen und 10 bis 40 % Copolymer von Tetrafluorethylen mit Perfluoralkylvinylether ist.

5. Überzogene Substrate nach Anspruch 1, worin die erste Schicht eine Mischung ist, umfassend, bezogen auf das Gewicht, 25 bis 60 % Fluorpolymere, 10 bis 25% Polyamidimid, 15 bis 40 % Aluminiumoxid und 10 bis 30 % Edelstahlflocke.

6. Überzogenes Substrat nach Anspruch 5, worin die zweite Schicht eine Mischung ist, umfassend, bezogen auf das Gewicht, 65 bis 95 % Fluorpolymer, 5 bis 20 % Aluminiumoxid und 5 bis 20 % Aluminiumflocke.

7. Überzogenes Substrat nach Anspruch 3, worin die erste Schicht eine Mischung ist, umfassend, bezogen auf das Gewicht, 35 bis 45 % Fluorpolymer, 12 bis 17 % Polyamidimid, 20 bis 30 % Aluminiumoxid und 15 bis 25 % Edelstahlflocke und die zweite Schicht eine Mischung ist, umfassend 80 bis 95 % Fluorpolymer, 5 bis 10 % Aluminiumoxid und 5 bis 10 % Aluminiumflocke.

**8.** Überzogenes Substrat nach Anspruch 2, das ebenfalls eine Menge eines Fluor-oberflächenaktiven Mittels enthält, das wirksam ist, um das Substrat zu benetzen.

**9.** Überzogenes Substrat nach Anspruch 7, worin in der ersten Schicht die Fluorpolymermischung 50 bis 70 % Polytetrafluorethylen und 30 bis 50 % fluoriertes Ethylen-Propylen und in der zweiten Schicht die Fluorpolymermischung 70 bis 80 % Polytetrafluorethylen und 20 bis 30 % Perfluoralkylvinylether enthält.

**10.** Überzogenes Substrat nach Anspruch 1, das ferner wenigstens einen weiteren Überzug besitzt, der ein Fluorpolymer enthält, das an der Außenfläche der zweiten Schicht haftet.

**Revendications**

**1.** Un substrat enduit adapté à une utilisation à des températures élevées dans un appareil reprographique, dans lequel le substrat est enduit d'au moins deux couches de composition différentes, une première couche adhérant au substrat et une seconde couche adhérant à la première, dans lequel :
la première couche comprend en poids 20 à 70 pour cent de polymère fluoré et 10 à 50 pour cent de polyamide imide, et des charges particulaires comprenant 10 à 50 pour cent d'oxyde d'aluminium et 10 à 25 pour cent de paillettes d'acier inoxydable et
la seconde couche comprend en poids 50 à 100 pour cent de polymère fluoré et des charges particulaires comprenant 5 à 40 pour cent d'oxyde d'aluminium et 5 à 40 pour cent de paillettes d'aluminium.

**2.** Le substrat enduit de la revendication 1 dans lequel dans chaque couche le polymère fluoré est choisi parmi le polytétrafluoroéthylène, l'éthylène-propylène fluoré, un copolymère de tétrafluoroéthylène avec un éther perfluoroalkylvinylique, et des mélanges de polytétrafluoroéthylène avec au moins un membre choisi parmi l'éthylène-propylène fluoré et un copolymère de tétrafluoroéthylène avec un éther perfluoroalkylvinylique.

**3.** Le substrat enduit de la revendication 2 dans lequel, dans la première couche, le polymère fluoré est un mélange en poids de 40 à 90 pour cent de polytétrafluoroéthylène et de 10 à 60 pour cent d'éthylène-propylène fluoré.

**4.** Le substrat enduit de la revendication 2 dans lequel, dans la seconde couche, le polymère fluoré est un mélange en poids de 60 à 90 pour cent de polytétrafluoroéthylène, et de 10 à 40 pour cent de copolymère de tétrafluoroéthylène avec un éther perfluoroalkylvinylique.

**5.** Le substrat enduit de la revendication 1 dans lequel la première couche est un mélange comprenant en poids de 25 à 60 pour cent de polymères fluorés, 10 à 25 pour cent de polyamide imide, 15 à 40 pour cent d'oxyde d'aluminium et 10 à 30 pour cent de paillettes d'acier inoxydable.

**6.** Le substrat enduit de la revendication 5 dans lequel la seconde couche est un mélange comprenant en poids de 65 à 95 pour cent de polymère fluoré, 5 à 20 pour cent d'oxyde d'aluminium et 5 à 20 pour cent de paillettes d'aluminium.

**7.** Le substrat enduit de la revendication 3
dans lequel la première couche est un mélange comprenant en poids 35 à 45 pour cent de polymère fluoré, 12 à 17 pour cent de polyamide imide, 20 à 30 pour cent d'oxyde d'aluminium et 15 à 25 pour cent de paillettes d'acier inoxydable, et
la seconde couche est un mélange comprenant 80 à 95 pour cent de polymère fluoré, 5 à 10 pour cent d'oxyde d'aluminium et 5 à 10 pour cent de paillettes d'aluminium.

**8.** Le substrat enduit de la revendication 2 qui contient aussi une quantité d'agent tensio-actif fluoré efficace pour mouiller le substrat.

9. Le substrat enduit de la revendication 7 dans lequel

dans la première couche, le mélange de polymères fluorés contient 50 à 70 pour cent de polytétrafluoroéthylène et 30 à 50 pour cent d'éthylène propylène fluoré, et

dans la seconde couche, le mélange de polymères fluorés contient 70 à 80 pour cent de polytétrafluoroéthylène et 20 à 30 pour cent d'éther perfluoroalkylvinylique.

10. Le substrat enduit de la revendication 1 qui a aussi au moins une autre couche contenant un polymère fluoré adhérant à la surface externe de la seconde couche.